# EUROPEAN PATENT SPECIFICATION

(11) **EP 3 348 859 B1**
(45) Date of publication and mention of the grant of the patent: **23.09.2020**
(21) Application number: 18150533.0
(22) Date of filing: 08.01.2018
(51) Int. Cl.: F16G 13/06

(54) **CHAIN**
KETTE
CHAÎNE

(30) Priority: 13.01.2017 TW 106101166
(43) Date of publication of application: 18.07.2018
(73) Proprietor: KMC Chain Industrial Co., Ltd., 71243 Tainan City (TW)
(72) Inventor: WU, Daniel, 70849 Tainan City (TW)
(74) Representative: Style, Kelda Camilla Karen

(56) References cited:
- EP-A1- 0 316 238
- EP-A1- 0 844 414
- EP-A1- 1 617 101
- EP-A2- 2 535 616
- DE-A1-102015 004 717
- FR-A1- 2 635 157
- US-A1- 2015 308 542
- US-A1- 2016 153 526

## Description

The disclosure relates to a chain, and more particularly to a chain for use in a variable speed drivetrain.

A transmission chain is an assembly of inner chain plates, outer chain plates, connecting rods and rollers, and is cooperatively used with sprockets. When the transmission chain is used in a variable speed drivetrain, it would be frequently moved from one sprocket to another. Therefore, auxiliary structures of the chain plates are needed for aiding the movement of the transmission chain among the sprockets.

Taiwanese Patent No. 1500555 discloses a conventional inner chain plate that has two opposite end sections, a connecting section connected between the end sections, and a recess formed in a side surface of the connecting section. The recess has two arc-shaped edges that are respectively proximate to the end sections . When a pair of the conventional inner chain plates cooperatively serve as an inner link unit of a transmission chain in such a manner that the recesses thereof face toward each other, a space formed between the conventional inner chain plates has a relatively large width so as to facilitate the movement of the transmission chain form one sprocket to another. However, in the forming process of the conventional inner chain plate, separation of the conventional inner chain plate from a forming die is relatively difficult due to the presence of the arc-shaped edges of the recess.

In addition, Taiwanese Utility Model Patent No. M338930 discloses a conventional transmission chain for a variable speed bicycle. The conventional transmission chain includes a plurality of inner link units each including two spaced-apart inner chain plates, and a plurality of outer link units each including two spaced-apart outer chain plates. The inner and outer link units are interconnected in an alternating arrangement. Specifically, each of the inner chain plates of the inner link units is formed with an inclined groove, and each of the outer chain plates of the outer link units is formed with an inclined groove as well. The inclined grooves of the inner chain plates of each of the inner link units are oblique to each other. Likewise, the inclined grooves of the outer chain plates of each of the outer link units are oblique to each other. Although the inclined grooves serve to increase the width of the space defined between the inner chain plates of each of the inner link units, the width is insufficient since the inclined grooves of the inner chain plates of each of the inner link units are oblique to each other.

Taiwanese Utility Model Patent No. M287192 discloses a conventional outer chain plate that has a protrusion. When a pair of the conventional outer chain plates cooperatively serve as an outer link unit of a transmission chain in such a manner that the protrusions thereof protrude away from each other, the protrusions thereof serve to diminish collision between the transmission chain and a set of sprockets. However, the width of a space defined in an inner link unit of the transmission chain is still relatively small.

EP0844414A1 discloses a derailleur bicycle chain (15) that includes a plurality of intermediate links (14), a plurality of pairs of outer links (18A, 18B), and a plurality of fasteners (22). Each fastener (22) connects an end of one of the plurality of intermediate links (14) between a corresponding pair of outer links (18A, 18B) so that the plurality of intermediate links (14) alternate with the plurality of pairs of outer links (18A, 18B) . Each intermediate link defines a recess (26) between each end thereof for receiving a sprocket tooth (30) therein, and each end of each intermediate link (14) forms drive faces (34, 36) facing toward and away from the recess (26).

US2016/153526A1 discloses a chain plate structure that includes a link plate body and a sleeve. The link plate body has an acting surface being provided with a first approach edge, two combining portions, and a limiting block located adjacent to the first approach edge. The limiting block has an altitude higher than an altitude of the acting surface. The sleeve is mounted on the link plate body and has a through hole whose maximum diameter is greater than a maximum diameter of a raised ring peripherally formed on the corresponding one of the combining portions. Therefore, when two of the link plate bodies are combined together, a first space is formed between the acting surfaces of the two aligned link plate bodies. The limiting block serves to limit the first space, while the sleeve is allowed to move on one of the combining portions so as to provide a second space.

EP2535616A2 discloses an inner link plate (14) for a chain (10). The inner link plate has a longitudinal centerline, an inside surface (26) arranged to face another inner link plate when the chain is assembled, an outside surface (27) opposite to the inside surface, and an outer peripheral edge (28) disposed between the inside and outside surfaces . The bicycle inner link plate basically has a first end portion (29), a second end portion (30) and a connecting portion (31). The first and second end portions are each provided with a connecting opening (29a,30a). The connecting portion includes a recess (32) disposed on the inside surface of the connecting portion. The recess has a maximum longitudinal width on the outer peripheral edge, and a minimum longitudinal width in a region adjacent the longitudinal centerline. The recess at least extends from the outer peripheral edge to the longitudinal centerline.

Therefore, an object of the disclosure is to provide a chain that can alleviate at least one of the drawbacks of the prior arts.

According to the disclosure, the chain includes at least one inner link unit and at least one outer link unit. The inner link unit includes an inner chain plate, an accompanying chain plate that is spaced apart from the inner chain plate, and an engaging space that is defined between the inner chain plate and the accompanying chain plate. The inner chain plate has two end sections that are spaced apart from each other along a central line, and a connecting section that interconnects the end sections and that has a first recess recessed away from the accompanying chain plate. Each of the end sections has a rod hole. The first recess has two first edges that are parallel to each other. The accompanying chain plate of the at least one inner link unit has a second recess that is recessed away from the inner chain plate. The second recess has two second edges that are parallel to each other and that are spaced apart from each other. The at least one outer link unit including two spaced-apart outer chain plates that are respectively disposed at two opposite lateral sides of said at least one inner link unit. The first edges of the first recess and the second edges of the second recess extend in the same direction. Each of the first edges of the first recess and the second edges of the second recess comprise straight edges. The first edges of the inner chain plate of the at least one inner link unit extend across the central line.

Other features and advantages of the disclosure will become apparent in the following detailed description of the embodiments with reference to the accompanying drawings, of which:
Figure 1 is a fragmentary top view illustrating a first embodiment of the chain according to the disclosure;
Figure 2 is a fragmentary side view of the chain with a sprocket assembly;
Figure 3 is a perspective view illustrating an inner chain plate of an inner link unit of the first embodiment;
Figure 4 is a side view illustrating the inner chain plate of the first embodiment;
Figure 5 is a sectional top view illustrating the inner chain plate and an accompanying chain plate of the first embodiment;
Figure 6 is a sectional view taken along line 6-6 in Figure 4;
Figure 7 is a fragmentary top view illustrating an example of a chain;
Figure 8 is a sectional top view illustrating an inner chain plate and an accompanying chain plate;
Figure 9 is a side view illustrating an inner chain plate of a third embodiment of the chain according to the disclosure;
Figure 10 is schematic sectional view illustrating an inner chain plate and an accompanying chain plate of the second embodiment used with a sprocket;
Figure 11 is a side view illustrating an inner chain a chain link plate of ; and Figure 12 is a side view of an inner chain plate,

Before the disclosure is described in greater detail, it should be noted that where considered appropriate, reference numerals or terminal portions of reference numerals have been repeated among the figures to indicate corresponding or analogous elements, which may optionally have similar characteristics.

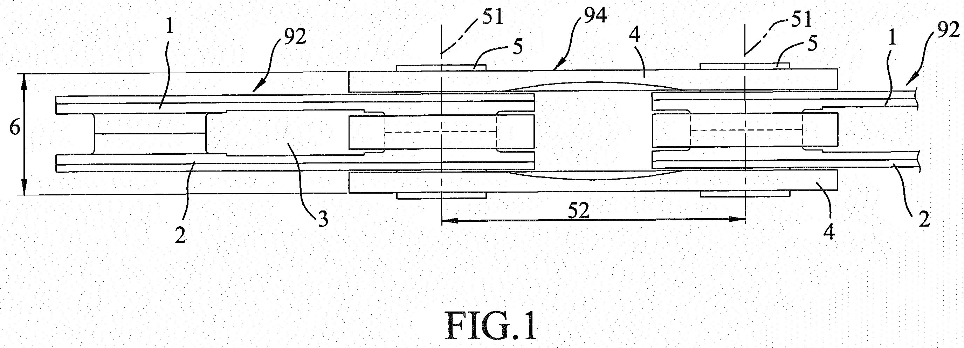

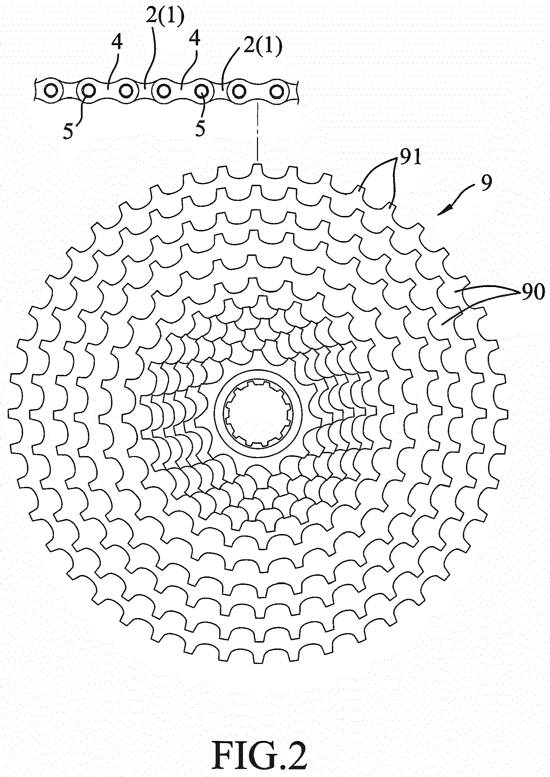

Referring to Figures 1 and 2, the first embodiment of the chain according to the disclosure is cooperatively used with a sprocket assembly 9 (see Figure 2). The sprocket assembly 9 includes twelve coaxially-arranged sprockets 90, each of which has a plurality of teeth 91.

The chain includes a plurality of inner link units 92 that are spaced apart from each other. Each of the inner link units 92 includes an inner chain plate 1, an accompanying chain plate 2 that is spaced apart from the inner chain plate 1, and an engaging space 3 that is defined between the inner chain plate 1 and the accompanying chain plate 2. The chain further includes a plurality of outer link units 94 each of which is connected between two adjacent ones of the inner link units 92, and a plurality of connecting rods 5 each of which has a central axis 51, and interconnects one of the inner link units 92 and a corresponding one of the outer link units 94. Each of the outer link units 94 includes two spaced-apart outer chain plates 4 that are respectively disposed at opposite lateral sides of the corresponding inner link unit 92. The central axes 51 of two adjacent ones of the connecting rods 5 are spaced apart from each other by a link distance 52. The ratio of the link distance 52 to the width 6 of the outer link units 94 is 2.39±0.12. The link distance 52 corresponds to the chordal pitch of each of the sprockets 90.

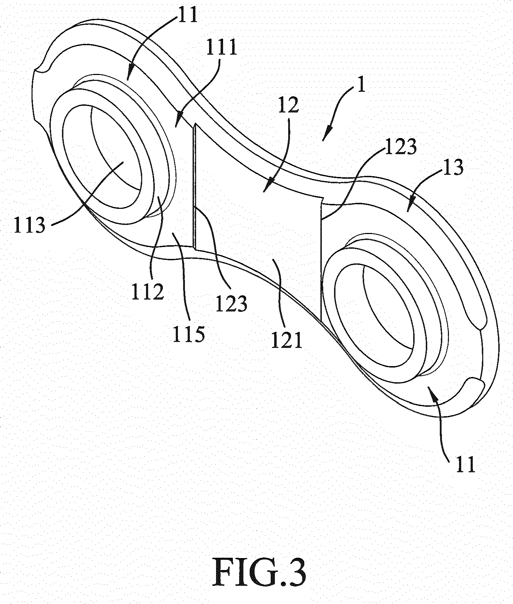

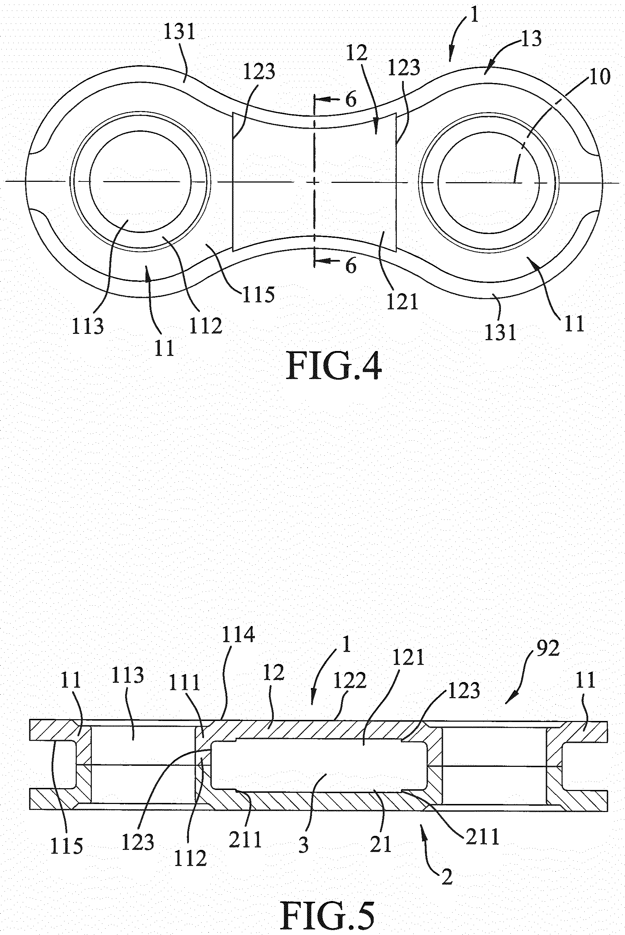

Referring to Figures 3 to 5, in this embodiment, the inner chain plate 1 of each of the inner link units 92 has two end sections 11 that are spaced apart from each other along a central line 10 (see Figure 4), a connecting section 12 that interconnects the end sections 11, and a guide section 13 that surrounds the end sections 11 and the connecting section 12.

For the sake of brevity, only one of the inner link units 92 is described in the following paragraphs.

Each of the end sections 11 of the inner chain plate 1 has a base wall 111 that is integrally connected to the connecting section 12, a protrusion 112 that protrudes from the base wall 111 toward the accompanying chain plate 2, and a rod hole 113 that is formed through the base wall 111 and the protrusion 112. The base wall has an outer annular surface 114 that faces away from the accompanying chain plate 2, and an inner annular surface 115 that faces toward the accompanying chain plate 2.

The connecting section 12 has a first recess 121 that is recessed away from the accompanying chain plate 2, and an outer connecting surface 122 that faces away from the accompanying chain plate 2. The first recess 121 has two first edges 123 that are spaced apart from each other and that are respectively proximate to the end sections 11. In this embodiment, the first edges 123 extend across the central line 10, are perpendicular to the central line 10, and are parallel to each other. In this embodiment, the outer connecting surface 122 of the connecting section 12 is connected to the outer annular surfaces 114 of the end sections 11, and is flush with the outer annular surfaces 114. The central line 10 substantially passes through the center of the rod hole 113 of each of the end sections 11.

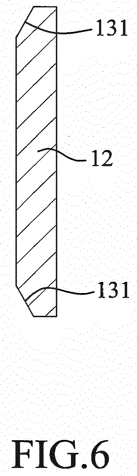

Referring to Figures 3, 5 and 6, the guide section 13 has two inclined guide surfaces 131 that are respectively located at two opposite sides of the central line 10 and that face toward the accompanying chain plate 2. Each of the inclined guide surfaces 131 extends along a periphery of the inner chain plate 1 and extends over the connecting section 12. Each of the inclined guide surfaces 131 is inclined away from the accompanying chain plate 2 in a direction away from the central line 10.

The accompanying chain plate 2 of the inner link unit 92 may be structurally identical to the inner chain plate 1. Preferably, the accompanying chain plate 2 has a second recess 21 that is recessed away from the inner chain plate 1. In other words, the inner link unit 92 has first and second recesses 121, 21 that face toward each other. The second recess 21 has two second edges 211 that respectively correspond in position to the first edges 123 of the first recess 121 of the inner chain plate 1 and that are parallel to the first edges 123 (i.e., the first recess 121 and the second recess 21 are parallel to each other). A distance between the second edges 211 is the same as that between the first edges 123.

Referring to Figures 2, 4 and 5, since the first recess 121 of the inner chain plate 1 is recessed away from the accompanying chain plate 2 and since the second recess 21 of the accompanying chain plate 2 is recessed away from the inner chain plate 1, the engaging space 3 defined between the inner chain plate 1 and the accompanying chain plate 2 has a relatively large width. It should be noted that since the first recess 121 and the second recess 21 are parallel to each other, the width (or an opening) of the engaging space 3 is sufficiently increased so as to facilitate entrance of a corresponding one of the teeth 91 of the sprockets 90 into the engaging space 3 during the movement of the chain from one of the sprockets 90 to another.

In addition, the inclined guide surfaces 131 of the guide section 13 serve to guide the entrance of a corresponding one of the teeth 91 of the sprockets 90 into the engaging space 3, so the chain is smoothly movable among the sprockets 90. It should be noted that since the first edges 123 of the first recess 121 of the inner chain plate 1 are parallel to each other, in a forming process, the inner chain plate 1 can be easily separated from a forming die.

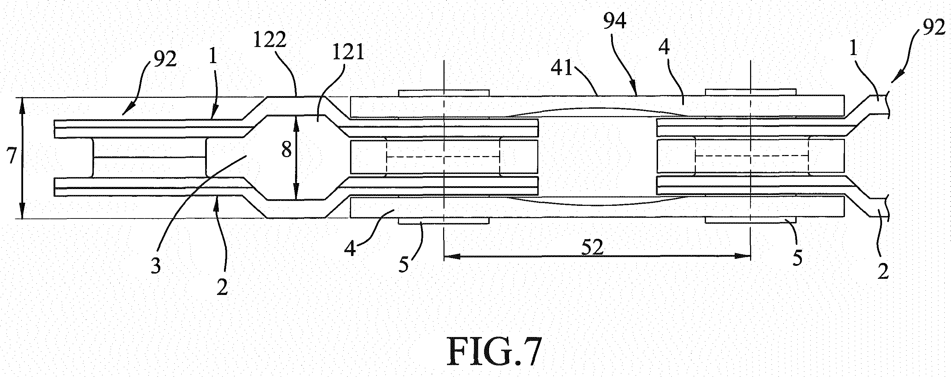

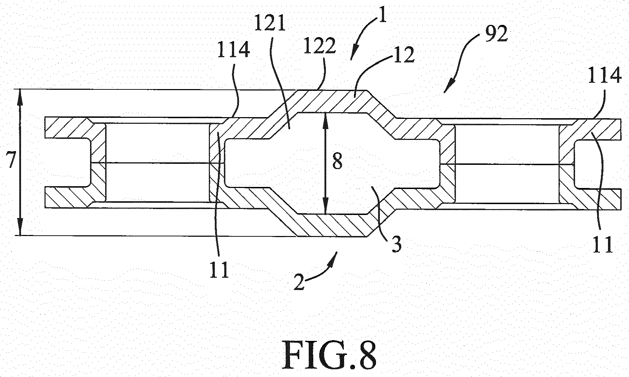

Referring to Figures 7 and 8, the second embodiment of the chain according to the disclosure is different from the first embodiment in the inner link units 92. The outer connecting surface 122 of the connecting section 12 of the inner chain plate 1 is not flush with the outer annular surfaces 114 of the end sections 11, and is farther from the accompanying chain plate 2 than the outer annular surfaces 114.

In more detail, the connecting section 12 of the inner chain plate 1 is misaligned from the end sections 11, and is farther from the accompanying chain plate 2 than the end sections 11, so that the connecting section 12 cooperates with the end sections 11 to form the first recess 121. The outer connecting surface 122 of the connecting section 12 is flush with an outer surface 41 of a corresponding one of the outer chain plates 4. The accompanying chain plate 2 is structurally identical to the inner chain plate 1. The ratio of the link distance 52 to a maximum width 7 of the inner link unit 92 is 2.39±0.12. The ratio of the link distance 52 to a maximum width 8 of the engaging space 3 defined between the inner chain plate 1 and the accompanying chain plate 2 is 5.5 ±0.12. By such, the engaging space 3 has a relatively large width, and the chain is smoothly movable among the sprockets 90 (see Figure 2) . In a modification, the maximum width 8 of the engaging space 3 is equal to the width of a space defined between the outer chain plates 4 of the outer link unit 94.

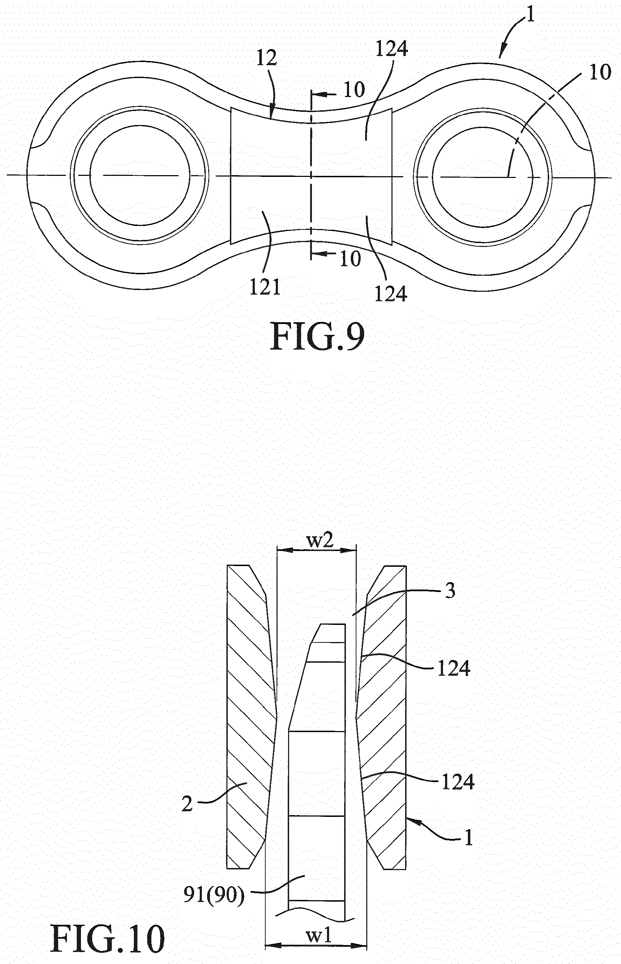

Referring to Figures 9 and 10, the third embodiment of the chain according to the disclosure is similar to the first embodiment. The connecting section 12 of the inner chain plate 1 further has two inclined inner surfaces 124 that are respectively located at the opposite sides of the central line 10 and that cooperatively define the first recess 121. Each of the inclined inner surfaces 124 is inclined away from the accompanying chain plate 2 in the direction away from the central line 10. The accompanying chain plate 2 is structurally identical to the inner chain plate 1. By such, the width (w1, see Figure 10) of the opening of the engaging space 3 is relatively large so as to facilitate entrance of a corresponding one of the teeth 91 of the sprockets 90 into the engaging space 3 during the movement of the chain from one of the sprockets 90 to another. Moreover, the width (w2, see Figure 10) of a middle portion of the engaging space 3 is relatively small, so the engagement between the engaging space 3 and the corresponding one of the teeth 91 is steady.

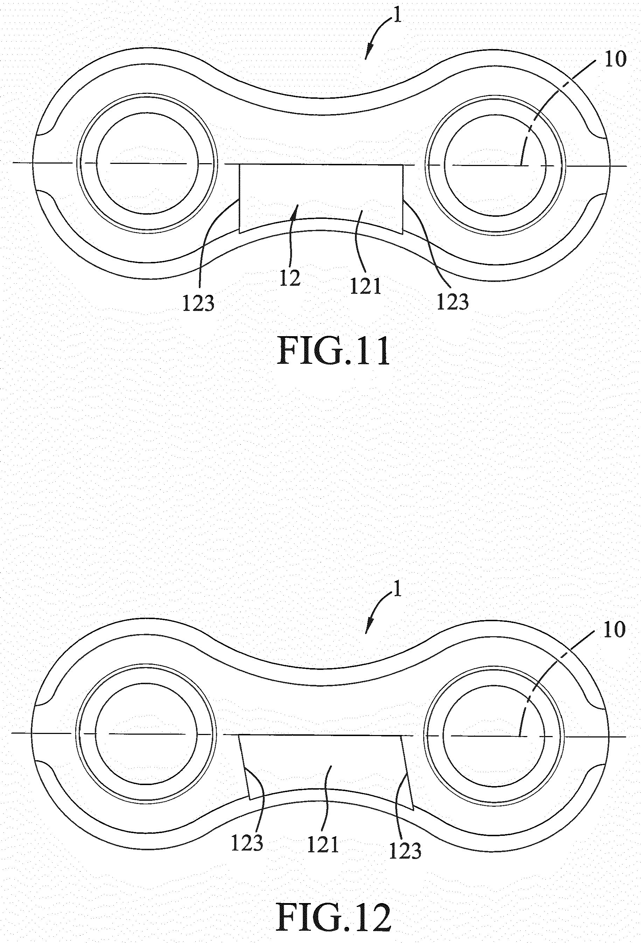

Referring to Figure 11, the fourth embodiment of the chain according to the disclosure is different from the first embodiment in the first recess 121 of the inner chain plate 1. The first recess 121 of the fourth embodiment is formed at only one side of the central line 10, and the first edges 123 of the first recess 121 are perpendicular to the central line 10. The accompanying chain plate (not shown in Figure 11) is structurally identical to the inner chain plate 1.

Referring to Figure 12, the fifth embodiment of the chain according to the disclosure is similar to the fourth embodiment. The first recess 121 of the fifth embodiment is also formed at only one side of the central line 10, but the first edges 123 of the first recess 121 are oblique to the central line 10. The accompanying chain plate (not shown in Figure 12) is structurally identical to the inner chain plate 1, and the first edges 123 of the first recess 121 and the second edges of the second recess (not shown in Figure 12) extend in the same direction. The first recess 121 of each of the fourth and fifth embodiments also serves to increase the width of the opening of the engaging space 3 (with reference to Figures 1 and 5).

In summary, the first recess 121 of the inner chain plate 1 and the second recess 21 of the accompanying chain plate 2 serve to increase the width of the opening of the engaging space 3, so the chain of this disclosure is suitable for a sprocket assembly that consists of a relatively large number of sprockets. Moreover, since the first edges 123 of the first recess 121 of the inner chain plate 1 are parallel to each other, the inner chain plate 1 can be easily separated from a forming die in the forming process thereof.

In the description above, for the purposes of explanation, numerous specific details have been set forth in order to provide a thorough understanding of the embodiments. It will be apparent, however, to one skilled in the art, that one or more other embodiments may be practiced without some of these specific details . It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A chain including at least one inner link unit (92) and at least one outer link unit (94), said at least one inner link unit (92) including an inner chain plate (1), an accompanying chain plate (2) that is spaced apart from said inner chain plate (1), and an engaging space (3) that is defined between said inner chain plate (1) and said accompanying chain plate (2), said inner chain plate (1) having two end sections (11) that are spaced apart from each other along a central line (10), and a connecting section (12) that interconnects said end sections (11) and that has a first recess (121) recessed away from said accompanying chain plate (2), each of said end sections (11) having a rod hole (113), said first recess (121) having two first edges (123) that are parallel to each other, said accompanying chain plate (2) of said at least one inner link unit (92) having a second recess (21) that is recessed away from said inner chain plate (1), said second recess (21) having two second edges (211) that are parallel to each other and that are spaced apart from each other, said at least one outer link unit (94) including two spaced-apart outer chain plates (4) that are respectively disposed at two opposite lateral sides of said at least one inner link unit (92);
said chain being **characterized in that** said first edges (123) of said first recess (121) and said second edges (211) of said second recess (21) extending in the same direction, and wherein each of said first edges (123) of said first recess (121) and said second edges (211) of said second recess (21) comprise straight edges, and wherein said first edges (123) of said inner chain plate (1) of said at least one inner link unit (92) extend across the central line (10).

2. The chain as claimed in claim 1, further **characterized in that** said first edges (123) of said inner chain plate (1) and said second edges (211) of said accompanying chain plate (2) are perpendicular to the central line (10).

3. The chain as claimed in claim 1, further **characterized in that** said first edges (123) of said inner chain plate (1) and said second edges (211) of said accompanying chain plate (2) are oblique to said central line (10).

4. The chain as claimed in claim 1, further **characterized in that** said inner chain plate (1) of said at least one inner link unit (92) further has two inclined inner surfaces (124) that are respectively located at two opposite sides of the central line (10) and that cooperatively define said first recess (121), each of said inclined inner surfaces (124) being inclined away from said accompanying chain plate (2) in a direction away from the central line (10).

5. The chain as claimed in claim 1, further **characterized in that** each of said end sections (11) of said inner chain plate (1) of said at least one inner link unit (92) has an outer annular surface (114) that faces away from said accompanying chain plate (2), said connecting section (12) of said inner chain plate (1) further having an outer connecting surface (122) that is connected to said outer annular surfaces (114) of said end sections (11) and that is flush with said outer annular surfaces (114).

6. The chain as claimed in claim 1, further **characterized in that** said inner chain plate (1) of said at least one inner link unit (92) further has a guide section (13) that surrounds said end sections (11) and said connecting section (12), said guide section (13) having at least one inclined guide surface (131) that extends along a periphery of said inner chain plate (1) and over said connecting section (12), and that is inclined away from said accompanying chain plate (2) in a direction away from the central line (10).

7. The chain as claimed in claim 6, further **characterized in that** each of said end sections (11) of said inner chain plate (1) of said at least one inner link unit (92) further has a protrusion (112) that protrudes toward said accompanying chain plate (2), said rod hole (113) of each of said end sections (11) being formed through said protrusion (112) of said corresponding end section (11).

8. In combination, the chain as claimed in claim 1 and a sprocket assembly (9), the sprocket assembly (9) including twelve coaxially-arranged sprockets (90) each of which has a plurality of teeth (91), said chain comprising a plurality of said inner link units (92) and a plurality of said outer link units (94), said chain further **characterized by**:
a plurality of connecting rods (5) each of which has a central axis (51), and interconnects one of said inner link units (92) and a corresponding one of said outer link units (94), the central axes (51) of two adjacent ones of said connecting rods (5) being spaced apart from each other by a link distance (52), the link distance (52) corresponding to the chordal pitch of each of the sprockets (90), a ratio of the link distance (52) to a width (6) of said outer link units (94) being 2.39+0.12.

9. The combination as claimed in claim 8, further **characterized in that**, for each of said inner link units (92), each of said end sections (11) of said inner chain plate (1) has an outer annular surface (114) that faces away from said accompanying chain plate (2), said connecting section (12) of said inner chain plate (1) further having an outer connecting surface (122) that is connected to said outer annular surfaces (114) of said end sections (11) and that is flush with said outer annular surfaces (114).

10. The combination as claimed in claim 8, further **characterized in that**, for each of said inner link units (92), each of said end sections (11) of said inner chain plate (1) has an outer annular surface (114) that faces away from said accompanying chain plate (2), said connecting section (12) of said inner chain plate (1) further having an outer connecting surface (122) that is connected to said outer annular surfaces (114) of said end sections (11), said outer connecting surface (122) of said connecting section (12) being not flush with said outer annular surfaces (114) of said end sections (11), and being farther from said accompanying chain plate (2) than said outer annular surfaces (114), a ratio of the link distance (52) to a maximum width (7) of said inner link unit (92) being 2.39+0.12.

11. The combination as claimed in claim 8, further **characterized in that** a ratio of the link distance (52) to a maximum width (8) of said engaging space (3) defined between said inner chain plate (1) and said accompanying chain plate (2) of each of said inner link units (92) is 5.5±0.12.

## Patentansprüche

1. Kette mit wenigstens einer inneren Gliedeinheit (92) und wenigstens einer äußeren Gliedeinheit (94), wobei die wenigstens eine innere Gliedeinheit (92) eine innere Kettenplatte (1), eine Begleitkettenplatte (2), die von der inneren Kettenplatte (1) beabstandet ist, und einen Eingriffsraum (3), der zwischen der inneren Kettenplatte (1) und der Begleitkettenplatte (2) definiert ist, enthält, wobei die innere Kettenplatte (1) zwei Endabschnitte (11), die entlang einer Mittellinie (10) voneinander beabstandet sind, und einen Verbindungsabschnitt (12), der die Endabschnitte (11) miteinander verbindet und der eine weg von der Begleitkettenplatte (2) eingelassene erste Aussparung (121) hat, aufweist, wobei jeder der Endabschnitte (11) ein Stabloch (113) aufweist, wobei die erste Aussparung (121) zwei erste Kanten (123) hat, die parallel zueinander sind, wobei die Begleitkettenplatte (2) der wenigstens einen inneren Gliedeinheit (92) eine zweite Aussparung (21) aufweist, die weg von der inneren Kettenplatte (1) eingelassen ist, wobei die zweite Aussparung (21) zwei zweite Kanten (211) hat, die parallel zueinander sind und die voneinander beabstandet sind, wobei die wenigstens eine äußere Gliedeinheit (94) zwei voneinander beabstandete äußere Kettenplatten (4) enthält, die an zwei gegenüberliegenden seitlichen Seiten der wenigstens einen inneren Gliedeinheit (92) angeordnet sind,
wobei die Kette **dadurch gekennzeichnet ist, dass** die ersten Kanten (123) der ersten Aussparung (121) und die zweiten Kanten (211) der zweiten Aussparung (21) in derselben Richtung verlaufen, und wobei jede der ersten Kanten (123) der ersten Aussparung (21) und der zweiten Kanten (211) der zweiten Aussparung (21) gerade Kanten aufweisen, und wobei die ersten Kanten (123) der inneren Kettenplatte (1) der wenigstens einen inneren Gliedeinheit (92) über die Mittellinie (10) verlaufen.

2. Kette nach Anspruch 1, ferner **dadurch gekennzeichnet, dass** die ersten Kanten (123) der inneren Kettenplatte (1) und die zweiten Kanten (211) der Begleitkettenplatte (2) senkrecht zur Mittellinie (10) sind.

3. Kette nach Anspruch 1, ferner **dadurch gekennzeichnet, dass** die ersten Kanten (123) der inneren Kettenplatte (1) und die zweiten Kanten (211) der Begleitkettenplatte (2) schräg zur Mittellinie (10) sind.

4. Kette nach Anspruch 1, ferner **dadurch gekennzeichnet, dass** die innere Kettenplatte (1) der wenigstens einen inneren Gliedeinheit (92) ferner zwei schräge Innenflächen (124) aufweist, die sich an zwei gegenüberliegenden Seiten der Mittellinie (10) befinden und die gemeinsam die erste Aussparung (121) definieren, wobei jede der schrägen Innenflächen (124) in einer Richtung weg von der Mittellinie (10) von der Begleitkettenplatte (2) weg geneigt ist.

5. Kette nach Anspruch 1, ferner **dadurch gekennzeichnet, dass** jeder der Endabschnitte (11) der inneren Kettenplatte (1) der wenigstens einen inneren Gliedeinheit (92) eine ringförmige Außenfläche (114) hat, die weg von der Begleitkettenplatte (2) gerichtet ist, wobei der Verbindungsabschnitt (12) der inneren Kettenplatte (1) ferner eine äußere Verbindungsfläche (122) hat, die mit den ringförmigen Außenflächen (114) der Endabschnitte (11) verbunden ist und die mit den ringförmigen Außenflächen (114) bündig ist.

6. Kette nach Anspruch 1, ferner **dadurch gekennzeichnet, dass** die innere Kettenplatte (1) der wenigstens einen inneren Gliedeinheit (92) ferner einen Führungsabschnitt (13) aufweist, der die Endabschnitte (11) und den Verbindungsabschnitt (12) umgibt, wobei der Führungsabschnitt (13) wenigstens eine schräge Führungsfläche (131) aufweist, die sich entlang eines Umfangs der inneren Kettenplatte (1) und über den Verbindungsabschnitt (12) erstreckt und die in einer Richtung weg von der Mittellinie (10) von der Begleitkettenplatte (2) weg geneigt ist.

7. Kette nach Anspruch 6, ferner **dadurch gekennzeichnet, dass** jeder der Endabschnitte (11) der inneren Kettenplatte (1) der wenigstens einen inneren Gliedeinheit (92) ferner einen Vorsprung (112) aufweist, der zur Begleitkettenplatte (2) ragt, wobei das Stabloch (113) jedes der Endabschnitte (11) durch den Vorsprung (112) des entsprechenden Endabschnitts (11) gebildet ist.

8. Kombination der Kette nach Anspruch 1 und einer Kettenradanordnung (9), wobei die Kettenradanordnung (9) zwölf koaxial angeordnete Kettenräder (90) enthält, von denen jedes mehrere Zähne (91) aufweist, wobei die Kette mehrere der inneren Gliedeinheiten (92) und mehrere der äußeren Gliedeinheiten (94) aufweist, wobei die Kette ferner **gekennzeichnet ist durch**
mehrere Pleuelstangen (5), von denen jede eine Mittelachse (51) hat und eine der inneren Gliedeinheiten (92) und eine entsprechende der äußeren Gliedeinheiten (94) miteinander verbindet, wobei die Mittelachsen (51) von zwei benachbarten der Pleuelstangen (5) voneinander um einen Gliedabstand (52) beabstandet sind, wobei der Gliedabstand (52) der Zahnteilung jedes der Kettenräder (90) entspricht, wobei ein Verhältnis des Gliedabstandes (52) zu einer Breite (6) der äußeren Gliedeinheiten (94) von 2,39 ± 0,12 beträgt.

9. Kombination nach Anspruch 8, ferner **dadurch gekennzeichnet, dass** für jede der inneren Gliedeinheiten (92) jeder der Endabschnitte (11) der inneren Kettenplatte (1) eine ringförmige Außenfläche (114) hat, die von der Begleitkettenplatte (2) abgewandt ist, wobei der Verbindungsabschnitt (12) der inneren Kettenplatte (1) ferner eine äußere Verbindungsfläche (122) hat, die mit den ringförmigen Außenflächen (114) der Endabschnitte (11) verbunden ist und die mit den ringförmigen Außenflächen (114) bündig ist.

10. Kombination nach Anspruch 8, ferner **dadurch gekennzeichnet, dass** für jede der inneren Gliedeinheiten (92) jeder der Endabschnitte (11) der inneren Kettenplatte (1) eine ringförmige Außenfläche (114) hat, die von der Begleitkettenplatte (2) abgewandt ist, wobei der Verbindungsabschnitt (12) der inneren Kettenplatte (1) ferner eine äußere Verbindungsfläche (122) hat, die mit den ringförmigen Außenflächen (114) der Endabschnitte (11) verbunden ist, wobei die äußere Verbindungsfläche (122) des Verbindungsabschnitts (12) mit den ringförmigen Außenflächen (114) der Endabschnitte (11) nicht bündig ist und weiter von der Begleitkettenplatte (2) entfernt ist als die ringförmigen Außenflächen (114), wobei ein Verhältnis des Gliedabstandes (52) zu einer maximalen Breite (7) der inneren Gliedeinheit (92) 2,39 ± 0,12 beträgt.

11. Kombination nach Anspruch 8, ferner **dadurch gekennzeichnet, dass** ein Verhältnis des Gliedabstandes (52) zu einer maximalen Breite (8) des zwischen der inneren Kettenplatte (1) und der Begleitkettenplatte definierten Eingriffsraums (2) jeder der inneren Gliedeinheiten (92) 5,5 ± 0,12 beträgt.

## Revendications

1. Chaîne comprenant au moins une unité de maillon intérieur (92) et au moins une unité de maillon extérieur (94), ladite au moins une unité de maillon intérieur (92) comprenant une plaque de chaîne intérieure (1), une plaque de chaîne d'accompagnement (2) qui est espacée de ladite plaque de chaîne intérieure (1), et un espace d'engagement (3) qui est défini entre ladite plaque de chaîne intérieure (1) et ladite plaque de chaîne d'accompagnement (2), ladite plaque de chaîne intérieure (1) ayant deux sections d'extrémité (11) qui sont espacées de chaque autre le long d'une ligne centrale (10), et une section de connexion (12) qui interconnecte lesdites sections d'extrémité (11) et qui a un premier évidement (121) en retrait par rapport à ladite plaque de chaîne d'accompagnement (2), chacune desdites sections d'extrémité (11) ayant un orifice de tige (113), ledit premier évidement (121) ayant deux premiers bords (123) qui sont parallèles entre eux, ladite plaque de chaîne d'accompagnement (2) de ladite au moins une unité de maillon intérieur (92) ayant un deuxième évidement (21) qui est en retrait par rapport à ladite plaque de chaîne intérieure (1), ledit deuxième évidement (21) ayant deux deuxièmes bords (211) qui sont parallèles entre eux et qui sont espacés de chaque autre, ladite au moins une unité de maillon extérieur (94) incluant deux plaques de chaîne extérieures espacées les unes des autres (4) qui sont respectivement disposées des deux côtés latéraux opposés de ladite au moins une unité de maillon intérieur (92) ;
ladite chaîne étant **caractérisée en ce que** lesdits premiers bords (123) dudit premier évidement (121) et lesdits deuxièmes bords (211) dudit deuxième évidement (21) s'étendent dans la même direction, et dans laquelle chacun desdits premiers bords (123) dudit premier évidement (121) et desdits deuxièmes bords (211) dudit deuxième évidement (21) comprennent des bords droits, et dans laquelle lesdits premiers bords (123) de ladite plaque de chaîne intérieure (1) de ladite au moins une unité de maillon intérieur (92) s'étendent à travers la ligne centrale (10).

2. Chaîne selon la revendication 1, **caractérisée en outre en ce que** lesdits premiers bords (123) de ladite plaque de chaîne intérieure (1) et lesdits deuxièmes bords (211) de ladite plaque de chaîne d'accompagnement (2) sont perpendiculaires à la ligne centrale (10).

3. Chaîne selon la revendication 1, **caractérisée en outre en ce que** lesdits premiers bords (123) de ladite plaque de chaîne intérieure (1) et lesdits deuxièmes bords (211) de ladite plaque de chaîne d'accompagnement (2) sont obliques par rapport à ladite ligne centrale (10).

4. Chaîne selon la revendication 1, **caractérisée en outre en ce que** ladite plaque de chaîne intérieure (1) de ladite au moins une unité de maillon intérieur (92) a en outre deux surfaces intérieures inclinées (124) qui sont respectivement situées sur deux côtés opposés de la ligne centrale (10) et qui définissent en collaboration ledit premier évidement (121), chacune desdites surfaces intérieures inclinées (124) étant inclinée loin de ladite plaque de chaîne d'accompagnement (2) dans une direction s'éloignant de la ligne centrale (10).

5. Chaîne selon la revendication 1, **caractérisée en outre en ce que** chacune desdites sections d'extrémité (11) de ladite plaque de chaîne intérieure (1) de ladite au moins une unité de maillon intérieur (92) a une surface annulaire extérieure (114) qui est orientée à l'opposé de ladite plaque de chaîne d'accompagnement (2), ladite section de connexion (12) de ladite plaque de chaîne intérieure (1) ayant en outre une surface de connexion extérieure (122) qui est reliée auxdites surfaces annulaires extérieures (114) desdites sections d'extrémité (11) et qui affleure lesdites surfaces annulaires extérieures (114).

6. Chaîne selon la revendication 1, **caractérisée en outre en ce que** ladite plaque de chaîne intérieure (1) de ladite au moins une unité de maillon intérieur (92) a en outre une section de guidage (13) qui entoure lesdites sections d'extrémité (11) et ladite section de connexion (12), ladite section de guidage (13) ayant au moins une surface de guidage inclinée (131) qui s'étend le long d'une périphérie de ladite plaque de chaîne intérieure (1) et au-dessus de ladite section de connexion (12), et qui est inclinée loin de ladite plaque de chaîne d'accompagnement (2) dans une direction s'éloignant de la ligne centrale (10).

7. Chaîne selon la revendication 6, **caractérisée en outre en ce que** chacune desdites sections d'extrémité (11) de ladite plaque de chaîne intérieure (1) de ladite au moins une unité de maillon intérieur (92) a en outre une saillie (112) qui fait saillie vers ladite plaque de chaîne d'accompagnement (2), ledit orifice de tige (113) de chacune desdites sections d'extrémité (11) étant formé à travers ladite saillie (112) de ladite section d'extrémité correspondante (11).

8. Chaîne selon la revendication 1 en combinaison avec un ensemble de pignons (9), l'ensemble de pignons (9) comprenant douze pignons disposés coaxialement (90) dont chacun a une pluralité de dents (91), ladite chaîne comprenant une pluralité desdites unités de maillon intérieur (92) et une pluralité desdites unités de maillon extérieur (94), ladite chaîne étant en outre **caractérisée par** :
une pluralité de tiges de connexion (5) dont chacune a un axe central (51) et interconnecte l'une desdites unités de maillon intérieur (92) et l'une correspondante desdites unités de maillon extérieur (94), les axes centraux (51) de deux tiges adjacentes parmi lesdites tiges de connexion (5) étant espacés de chaque autre par une distance de maillon (52), la distance de maillon (52) correspondant au pas de corde de chacun des pignons (90), un rapport de la distance de maillon (52) à une largeur (6) desdites unités de maillon extérieur (94) s'élevant à 2,39 ± 0,12.

9. Combinaison selon la revendication 8, **caractérisée en outre en ce que**, pour chacune desdites unités de maillon intérieur (92), chacune desdites sections d'extrémité (11) de ladite plaque de chaîne intérieure (1) a une surface annulaire extérieure (114) qui est orientée à l'opposé de ladite plaque de chaîne d'accompagnement (2), ladite section de connexion (12) de ladite plaque de chaîne intérieure (1) ayant en outre une surface de connexion extérieure (122) qui est connectée auxdites surfaces annulaires extérieures (114) desdites sections d'extrémité (11) et qui affleure lesdites surfaces annulaires extérieures (114).

10. Combinaison selon la revendication 8, **caractérisée en outre en ce que**, pour chacune desdites unités de maillon intérieur (92), chacune desdites sections d'extrémité (11) de ladite plaque de chaîne intérieure (1) a une surface annulaire extérieure (114) qui est orientée à l'opposé de ladite plaque de chaîne d'accompagnement (2), ladite section de connexion (12) de ladite plaque de chaîne intérieure (1) ayant en outre une surface de connexion extérieure (122) qui est connectée auxdites surfaces annulaires extérieures (114) desdites sections d'extrémité (11), ladite surface de connexion extérieure (122) de ladite section de connexion (12) n'affleurant pas lesdites surfaces annulaires extérieures (114) desdites sections d'extrémité (11) et étant plus éloignée de ladite plaque de chaîne d'accompagnement (2) que lesdites surfaces annulaires extérieures (114), un rapport de la distance de maillon (52) à une largeur maximale (7) de ladite unité de maillon intérieur (92) s'élevant à 2,39 ± 0,12.

11. Combinaison selon la revendication 8, **caractérisée en outre en ce qu'**un rapport de la distance de maillon (52) à une largeur maximale (8) dudit espace d'engagement (3) qui est défini entre ladite plaque de chaîne intérieure (1) et ladite plaque de chaîne d'accompagnement (2) de chacune desdites unités de maillon intérieur (92) s'élève à 5,5 ± 0,12.
